(19) Europäisches Patentamt
European Patent Office
Office européen des brevets

(11) **EP 2 327 966 B1**

(12) **EUROPÄISCHE PATENTSCHRIFT**

(45) Veröffentlichungstag und Bekanntmachung des Hinweises auf die Patenterteilung:
**28.03.2012 Patentblatt 2012/13**

(51) Int Cl.:
*G01S 7/285* *(2006.01)*       *G01S 7/40* *(2006.01)*
*G01F 23/284* *(2006.01)*

(21) Anmeldenummer: **09175937.3**

(22) Anmeldetag: **13.11.2009**

(54) **Messung der Entfernung einer Grenzfläche**

Measurement of the distance of a boundary surface

Mesure de distance d'une surface de séparation

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**01.06.2011 Patentblatt 2011/22**

(73) Patentinhaber: **SICK AG**
**79183 Waldkirch (DE)**

(72) Erfinder:
• **Weber, Thomas**
**77960 Seelbach (DE)**

• **Blöhbaum, Frank**
**79312 Emmendingen (DE)**

(74) Vertreter: **Hehl, Ulrich**
**SICK AG**
**Intellectual Property**
**Erwin-Sick-Strasse 1**
**79183 Waldkirch (DE)**

(56) Entgegenhaltungen:
**DE-A1- 19 949 992       DE-A1-102005 021 358**
**US-A1- 2007 192 391**

**Beschreibung**

Die Erfindung betrifft ein Verfahren und einen Sensor zur Messung der Entfernung zu einer Grenzfläche nach dem Oberbegriff von Anspruch 1 beziehungsweise 5.

Es ist aus vielen Anwendungen bekannt, den Abstand zu einer Grenzfläche aus der Laufzeit eines Mikrowellensignals zu bestimmen. Eine Möglichkeit ist, das Signal frei abzustrahlen, wie dies beim Radar geschieht. Wegen der unkontrollierten Wellenausbreitung wird häufig das TDR-Messprinzip (time domain reflectometry) bevorzugt. Es basiert auf der Bestimmung von Laufzeiten eines elektromagnetischen Signals, um den Abstand einer Diskontinuität des Leitungswellenwiderstandes wie etwa eines Kabelbruchs oder einer Grenzfläche zwischen zwei Medien zu ermitteln. Der Unterschied zum Radar besteht darin, dass die elektromagnetischen Wellen nicht ins Freie abgestrahlt, sondern entlang eines Leiters geführt werden. Eine der ältesten Anwendungen des TDR-Prinzips ist die Lokalisierung von Brüchen in Überseeleitungen. Man kann TDR ebenso nutzen, um Füllstände in einem Behälter zu bestimmen, Leitungen in elektronischen Schaltungen zu testen oder um für Bauplanung oder Landwirtschaft den Feuchtigkeitsgehalt des Erdbodens in bestimmten Tiefen zu bestimmen.

Bei einer TDR-Messung wird ein sehr kurzer elektrischer Sendeimpuls in den Leiter eingespeist und durchläuft ihn in Richtung des gegenüberliegenden Endes. Trifft der Impuls auf eine Störstelle, was gleichbedeutend mit einer Änderungen des örtlichen Wellenwiderstand ist, wird ein Teil der Sendeenergie zum Leitungseingang zurückreflektiert. Aus der Laufzeit zwischen dem Aussenden des Sendeimpulses und dem Empfang der Reflexion lässt sich die Position der Störstelle ortsgenau errechnen. Für Anwendungen zur Füllstandsmessung ist der Leiter als Monosonde oder Koaxialsonde ausgebildet, welche senkrecht oder schräg in den Tank eingeführt wird und möglichst dicht bis zum Boden reicht, um den vollen Messbereich abzudecken.

Um den Empfangszeitpunkt genau bestimmen zu können, wird der Verlauf des Empfangssignals abgetastet und einer digitalen Auswertung zugeführt. Da die Pulsbreite in der Größenordnung von nur einigen hundert Pikosekunden liegt, müsste ein A/D-Wandler im hohen Gigahertzbereich arbeiten, um den Pulsverlauf aufzulösen. Derartige Bauteile sind unverhältnismäßig teuer.

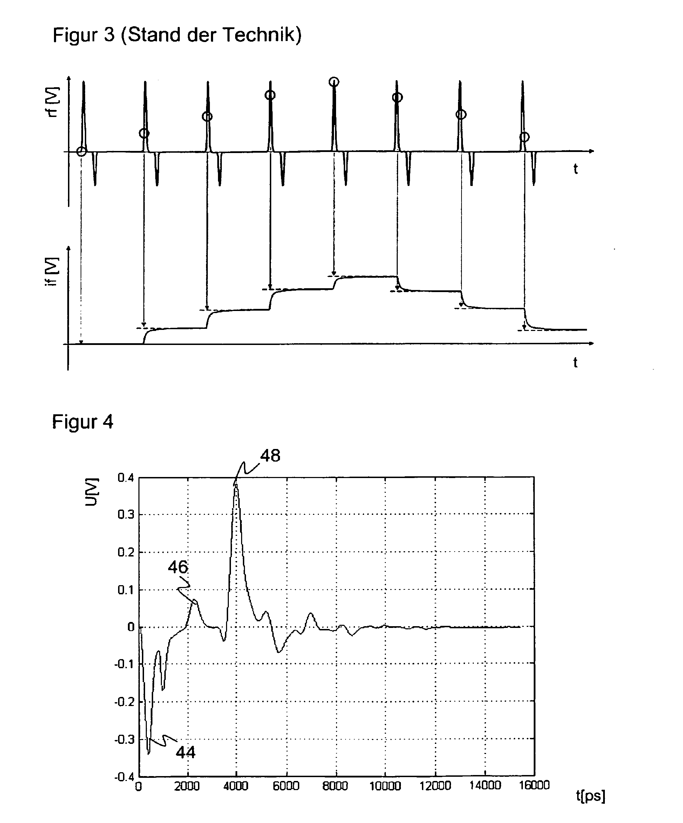

Daher wird eine Zeitdehnung vorgenommen. Das Prinzip ist in Figur 3 veranschaulicht. Im oberen Teil der Figur 3 ist das Empfangssignal dargestellt, welches eine Vielzahl von Empfangspulsen aufweist, die jeweils auf den wiederholt gesandten Messpuls folgen. Da ein verfügbarer AID-Wandler die einzelnen Pulse nicht auflösen kann, wird jeder Empfangspuls nur an einer einzigen Stützstelle abgetastet, wobei aber die Stützstelle mit jeder Wiederholung ein kleines Stück verschoben wird. Damit resultiert das im unteren Teil der Figur 3 dargestellte zeitgedehnte Signal, das von dem A/D-Wandler erfasst werden kann.

Die erforderlichen zeitlichen Verschiebungen werden aus einem kleinen Frequenzunterschied zwischen Sendefrequenz $F_E$ und Abtastfrequenz $F_S$ erzeugt. Für die erste Stützstelle wird ein Zeitpunkt $T_1:=0$ gewählt, etwa der Beginn des Sendepulses. Die weiteren Stützstellen liegen dann zu Zeitpunkten $T_n:=T_{n-1}+dT$, wobei dT durch die beiden Frequenzen als $dT=1/F_E-1/F_S$ üblicherweise im Bereich von 5-100ps gegeben ist, mit einem Zeitdehnungsfaktor $|F_E/(F_S - F_E)|$.

In der Einleitung der US 2007/0192391 A1 ist dieses herkömmliche Verfahren beschrieben. Bei einer Sendefrequenz von 2 MHz und einer Abtastfrequenz von 1,99999 MHz beträgt die Offsetfrequenz 10 Hz, und damit verschiebt sich der Abtastzeitpunkt über eine Periode von 100 Millisekunden linear und regelmäßig gegenüber dem Sendezeitpunkt in einem der geringen Differenzperiode entsprechenden feinen Zeitraster mit einem Zeitdehnungsfaktor von 200.000. Der Abtasttakt wird dabei mittels einer PLL (Phase-locked Loop) an den Sendetakt gekoppelt. Die US 200710192391 A1 schlägt als Verbesserung vor, anstelle einer PLL eine DDS (Direct Digital Synthesis) für die Erzeugung der Frequenzen zu verwenden.

Aus der DE 199 49 992 A1 ist ein Verfahren zur Erhöhung der Störfestigkeit eines Zeitbereichsreflektometers bekannt, welches Signale auf einer Wellenleitung mit einer Pulsrepetierfrequenz wiederholt aussendet und zur Zeitdehnung mit Abtastpulsen abtastet, die mit einer Abtastfrequenz wiederholt werden. Dabei wird aus den Messwerten ein Störmaß berechnet, und Pulsrepetierfrequenz und Abtastfrequenz werden verändert, um das Störmaß zu reduzieren.

Die DE 10 2005 021 358 A1 offenbart ein Laufzeitmessverfahren zur Ermittelung einer Distanz, bei dem ein zeitgedehntes Zwischenfrequenzsignal gefiltert wird. Dabei wird die Zwischenfrequenz durch Variation von Pulsrepetierfrequenz beziehungsweise Abtastfrequenz auf eine Grenzfrequenz oder Mittenfrequenz des Filters angepasst.

Bei den herkömmlichen Sensoren tritt das Problem auf, dass elektromagnetische Störer die Messgenauigkeit teilweise erheblich beeinträchtigen oder sogar die Bestimmung eines Messwerts verhindern. Dieses Problem zeigt sich besonders bei Füllstandsmessgeräten mit geführter Mikrowelle, die nach der elektrischen Schutzklasse III ausgeführt sind. Bei leitungsgeführten Störungen, beispielsweise induzierten Hochfrequenzströmen nach der Norm EN 61000-4-6, ergeben sich Störströme über das Gerät, welche in die Messung des Hochfrequenzsignals einfließen. Geräte der Schutzklasse II sind tendenziell weniger betroffen, weil hier in der Regel durch die Potentialtrennung, üblicherweise im Versorgungskreis des Geräts mit einem DC/DC-Konverter, eine hohe Impedanz in den Stromkreis der Störung eingeführt wird.

Man kann versuchen, den Störungen durch bessere EMV-Abschirmung zu begegnen, aber die Robustheit der eigentlichen Auswertung wird so nicht verbessert. Überdies müsste nicht nur der Sensor selbst abgeschirmt werden, sondern auch dessen Anschlussleitungen abgeschirmt oder vereinzelt fern von störenden Fremdleitungen verlegt werden. Das ist nicht nur aufwändig, sondern stellt auch externe Bedingungen, die der Sensor als solcher nicht erfüllen kann. Denkbar ist auch eine Entkopplung, aber dafür werden kostentreibende zusätzliche Elemente benötigt.

Es ist daher Aufgabe der Erfindung, die Robustheit der Messung von Entfernungen zu einer Grenzfläche zu erhöhen.

Diese Aufgabe wird durch ein Verfahren zur Messung der Entfernung einer Grenzfläche gemäß Anspruch 1 sowie einen Sensor gemäß Anspruch 5 gelöst, dessen Steuerung zur Ausführung eines solchen Verfahrens ausgebildet ist. Die Lösung geht von dem Grundgedanken aus, dass durch das Undersampling für die Zeitdehnung der extrem kurzen und damit hochfrequente Anteile aufweisenden Empfangspulse mit meist jeweils nur einer Stützstelle je einzelnem Empfangspuls das Nyquist-Kriterium nicht eingehalten und damit das Abtasttheorem massiv verletzt wird. Störsignale erzeugen deshalb Faltprodukte im Nutzsignalband, welche die Signalauswertung verhindern oder beeinträchtigen. Erfindungsgemäß wird die Abtastfrequenz gewechselt, damit solche Störer-Faltprodukte unterdrückt oder sogar ganz aus dem Nutzband geschoben werden. Da bei einer zeitgedehnten Abtastung die effektive Abtastfrequenz auch von der Sendefrequenz abhängt, lässt sich ein Wechsel der Abtastfrequenz durch einen Frequenzwechsel in der Sendefrequenz, der Abtastfrequenz oder in sowohl Sendefrequenz als auch Abtastfrequenz erreichen.

Die Erfindung hat den Vorteil, dass eine Beeinträchtigung der Messung durch die genannten Aliaseffekte zumindest verringert oder sogar ganz verhindert wird. Die Zuverlässigkeit und Messgenauigkeit besonders in Umgebungen mit hochfrequenten Störern wird so erheblich verbessert. Zugleich sorgt der Frequenzwechsel dafür, dass Störungen des Geräts, also abgestrahlte oder leitungsgebundene Störungen insbesondere durch den Sendevorgang, spektral verteilt werden und daher kleinere Störspitzen verursacht werden.

Um eine Zeitdehnung zu erreichen, wird die Abtastfrequenz wie einleitend beschrieben ungleich der Sendefrequenz gewählt. Die so entstehende Zwischenfrequenz bestimmt den Zeitdehnungsfaktor. Somit wird in der Praxis nicht ein beliebiges Paar aus Sendefrequenz und Abtastfrequenz gewählt, sondern eines, welches eine geeignete Zwischenfrequenz ergibt.

Das zeitgedehnte digitale Empfangssignal wird bevorzugt mehrfach mit jeweils einer anderen Abtastfrequenz gewonnen, die zufällig oder pseudozufällig gewählt ist und die Laufzeit wird aus einer Scharmittelung der mehrfach gewonnenen Empfangssignale bestimmt. Die Energie des Störers wird somit über das Spektrum verteilt, so dass nach Scharmittelung das Signal/Störerverhältnis in einem Maße verbessert ist, dass sich durch die Anzahl der in die Mittelung eingehenden Messungen praktisch beliebig verbessern lässt. Die Sequenz muss dabei nicht notwendig zur Laufzeit zufällig und auch nicht durch einen Zufallszahlenalgorithmus pseudozufällig erzeugt werden. In den allermeisten Fällen genügt auch eine fest vorgegebene Sequenz, da es äußerst unwahrscheinlich ist, auf einen Störer zu treffen, der ausgerechnet dieses Muster nachvollzieht und somit nicht herausgemittelt werden kann.

Erfindungsgemäß wird die Frequenz eines Störers, insbesondere des energiereichsten Störers, im digitalen Band geschätzt. Eine Schätzung der tatsächlichen Frequenz eines hochfrequenten Störers, also derjenigen im analogen Band, ist wegen der Verletzung des Abtasttheorems zunächst nicht möglich. Die Schätzung erfolgt beispielsweise mit einem fast frequency estimation algorithm (ffea). Einen geringen Rechenaufwand hat der Burg-Algorithmus zur Spektralschätzung (beispielsweise aus: Kammeyer, Kroschel, "Digitale Signalverarbeitung - Filterung und Spektralanalyse mit Matlab-Übungen", Vieweg & Teubner). Natürlich gewinnt man die notwendigen Informationen auch durch eine Fouriertransformation, beispielsweise FFT (Fast Fourier Transformation). Sind mehrere Störer vorhanden, so wird nach Möglichkeit auf eine Abtastfrequenz gewechselt, in der keiner der Störer im Nutzband liegt. Ist eine solche Abtastfrequenz nicht auffindbar, so wird nur der energiereichste Störer behandelt.

Eine angepasste Abtastfrequenz wird so eingestellt, dass der Störer außerhalb eines Nutzbandes, insbesondere am oberen oder unteren Rand des digitalen Bandes zu liegen kommt. Die Auswertung im Nutzband ist dann von dem Störer nicht mehr beeinträchtigt.

Erfindungsgemäß wird die angepasste Abtastfrequenz wie folgt aufgefunden:

- Schätzen einer ersten Störerfrequenz des Störers im digitalen Band bei einer ersten Abtastfrequenz;
- Schätzen einer zweiten Störerfrequenz des Störers im digitalen Band bei einer um eine Differenzabtastfrequenz von der ersten Abtastfrequenz verschiedenen zweiten Abtastfrequenz;
- Bestimmen eines Skalierungsfaktors aus dem Differenzbetrag von erster und zweiter Störungsfrequenz und;
- Festlegen der angepassten Abtastfrequenz mittels des Skalierungsfaktors und der Differenzabtasttrequenz.

Hier wird ein geschlossener Algorithmus verwendet, der nach zwei Messungen die angepasste Frequenz berechnet hat. Sofern die Rechenzeit für eine Schätzung der Frequenz des Störers kurz ist, könnte auch nach jeder der beiden Messungen überprüft werden, ob der Störer ohnehin schon außerhalb des Nutzbandes liegt und dann das Verfahren vorzeitig abgebrochen werden, um mit dieser angepassten Frequenz weiterzuarbeiten.

Die Differenzabtastfrequenz ist dabei so klein gewählt, dass der Störer sowohl für die erste Abtastfrequenz als auch für die zweite Abtastfrequenz bis zu einer vorgegebenen maximalen Störerfrequenz in derselben Oberwellenmode liegt. Sofern sich nämlich zwischen den beiden Messungen die Oberwellenmode ändert, ist für die Berechnung der angepassten Frequenz mindestens eine weitere Messung erforderlich, um herauszufinden, in welcher Oberwellenmode der Störer liegt. Durch eine entsprechend kleine Schrittweite ist dieser komplizierter zu behandelnde Fall von vorneherein ausgeschlossen.

Vorteilhafterweise wird in einem ersten Schritt eine Messung über einen maximalen Messbereich mit einer ersten Abtastfrequenz und einer ersten Sendefrequenz, die einen ersten Zeitdehnungsfaktor ergeben, und anschließend in einem zweiten Schritt eine Messung nur über den Teilbereich des Messbereichs, in dem die an der Grenzfläche reflektierten Signalanteile liegen, mit einer zweiten Abtastfrequenz und einer zweiten Sendefrequenz ausgeführt, die einen zweiten Zeitdehnungsfaktor größer dem ersten Zeitdehnungsfaktor ergeben. Man erspart sich so, ein unnötig langes hochaufgelöstes Signal mit zahlreichen Datenpunkten zwischenzuspeichern und auszuwerten. Hochaufgelöste Daten werden stattdessen nur für den interessanten Bereich in der Umgebung der Grenzfläche aufgenommen, so dass die Auswertung schneller ist und weniger Ressourcen benötigt.

Bei einem Wechsel der Abtastfrequenz wird bevorzugt auch die Sendefrequenz gewechselt, insbesondere um bei einem Frequenzwechsel einen Zeitdehnfaktor konstant zu halten. Ein Wechsel der Abtastfrequenz ändert auch die Zwischenfrequenz und damit die Bandbreite des Zwischenfrequenzsignals und den Zeitdehnfaktor. Damit verlieren auch Filter, die nur das Nutzband passieren lassen, ihre Anpassung. Dieser Effekt ist meist nicht erwünscht und durch gleichzeitige Anpassung der Sendefrequenz vermeidbar. Denkbar ist alternativ, digitale Filter zu verwenden und statt der Sendefrequenz die Filter anzupassen.

Der erfindungsgemäße Sensor ist insbesondere ein Füllstandssensor und weist einen Sender und einen Empfänger zum Aussenden und Empfangen eines elektromagnetischen Signals, insbesondere eines Mikrowellensignals sowie eine Steuerung auf, welche dafür ausgebildet ist, die Entfernung einer Grenzfläche mit einem erfindungsgemäßen Verfahren zu bestimmen. Somit kann der Sensor für alle Ausführungsformen des erfindungsgemäßen Verfahrens ausgebildet sein und zeigt dabei analoge Vorteile.

Dabei ist bevorzugt ein Filter vorgesehen, um Signale außerhalb eines Nutzbandes abzuschneiden und/oder es ist ein Filter vorgesehen, um Frequenzen von Störern zu unterdrücken. Ein Filter, der Signale außerhalb des Nutzbands abschneidet, ist beispielsweise ein Tiefpass oder ein Hochpass, je nachdem, ob der Störer an den rechten oder den linken Rand des digitalen Bandes verschoben wird. Beide Funktionen zugleich erfüllt ein auf das Nutzband abgestimmter Bandpass. Will man umgekehrt nur gezielt die Frequenz des Störer unterdrücken, so kann dafür ein Notchfilter oder Kerbfilter eingesetzt werden, der so parametriert wird, dass er gerade das schmale Frequenzband des Störers unterdrückt. So lassen sich vor allem zusätzliche Störer behandeln, die neben dem energiereichsten Störer auftreten. Auch der energiereichste Störer kann mit einem Notchfilter unterdrückt werden. Selbst wenn er im Nutzband liegt, wird damit zwar das Nutzsignal verändert, das Signal/Stör -Verhältnis aber trotzdem verbessert, wenn auch nicht so effektiv wie durch eine Verschiebung des Störers aus dem Nutzband. Ein weniger radikales Vorgehen als ein Notchfilter, der die Störfrequenz komplett ausblendet, wäre der Versuch, schmalbandige Störer durch adaptive Filter zu schätzen und den so gewonnenen Schätzwert aus dem Signal herauszurechnen. Mit optimalen Voraussetzungen bleibt dann nur noch das Nutzsignal bestehen. Limitierungen ergeben sich, wenn die EMV-Störungen sehr dynamisch sind, sich also in Frequenz, Repetierrate, Frequenzspektrum und dergleichen zeitlich stark ändern, so dass die Schätzung ungenau wird.

Vorteilhafterweise ist eine DDS oder eine PLL-Struktur vorgesehen, um Abtastfrequenzen und/oder Sendefrequenzen einzustellen. Eine DDS ist etwas kostenintensiver, dafür sehr schnell und stabil in der Ausgabe der jeweils gewünschten Frequenz. Es ist denkbar, dass zukünftig Bausteine verfügbar sind, welche gewünschte Frequenzen aus einem hohen Grundtakt mit verschiedenen Teilern ableiten. Möglich ist schon heute, umgekehrt aus einem Grundtakt mit PLLs Vielfache abzuleiten, wobei sogar FPGAs (Field Programmable Gate Array) verfügbar sind, in denen Grundtakt und PLLs mit einstellbaren Vielfachen implementiert sind.

Der Sensor ist bevorzugt als Radarsensor ausgebildet, oder der Sensor arbeitet nach dem TDR-Prinzip, wobei eine Monosonde, eine Doppelsonde oder eine Koaxialsonde zur Führung des Signals vorgesehen ist. Solche Sensoren profitieren von der verbesserten Messgenauigkeit und erhöhten Robustheit gegenüber Störern.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:

Fig. 1    eine schematische Darstellung eines TDR-Sensors in einer Anwendung als Füllstandssensor;

Fig. 2    ein Blockschaltbild eines Sensorkopfes mit der Ansteuerung des Sensors gemäß Figur 1;

Fig. 3    eine Darstellung der Signalverläufe des Empfangssignals rf und des zeit- gedehnten Signals if bei herkömmlicher Zeitdehnung;

Fig. 4    eine beispielhafte Darstellung des Verlaufs eines ungestörten Empfangs- signals;

Fig. 5    einen zeitgedehnt abgetasteten Verlauf eines Empfangssignals mit Alias- effekten eines Störers, der zu Faltprodukten im hochfrequenten Bereich des digitalen Bandes führt;

Fig. 6      das Frequenzspektrum der Darstellung gemäß Figur 5;

Fig. 7      eine Darstellung gemäß Figur 5 nach Ausfiltern des Störers mit einem Tief- passfilter;

Fig. 8      das Frequenzspektrum der Darstellung gemäß Figur 7;

Fig. 9      einen zeitgedehnt abgetasteten Verlauf eines Empfangssignals mit Alias- effekten eines Störers, der zu Faltprodukten im Nutzband führt;

Fig. 10     das Frequenzspektrum der Darstellung gemäß Figur 9;

Fig. 11     eine Darstellung gemäß Figur 9 nach Ausfiltern des Störers mit einem Tief- passfilter;

Fig. 12     das Frequenzspektrum der Darstellung gemäß Figur 11;

Fig. 13     das Frequenzspektrum eines Summensignals mehrerer Messungen bei verschiedenen Abtastfrequenzen;

Fig. 14     der beispielhafte Verlauf eines Empfangssignals zur Erläuterung von Berei- chen, in denen die Frequenz eines Störers bestimmt werden kann;

Fig. 15     ein Ablaufdiagramm zu einem erfindungsgemäßen Verfahren zum Auffin- den einer angepassten Abtastfrequenz;

Fig. 16     ein schematisches Frequenzspektrum zur Erläuterung der Verschiebung eines Störers in einen Randbereich außerhalb des Nutzbandes;

Fig. 17     ein schematisches Frequenzspektrum zur Erläuterung von Aliaseffekt und Oberwellenmoden;

Fig. 18     ein schematisches Frequenzspektrum zur Erläuterung eines beispielhaften Verfahrens zum Auffinden der angepassten Abtastfrequenz mit zufälligen Frequenzwechseln;

Fig. 19     eine Darstellung gemäß Fig. 18 mit äquidistanten Frequenzwechseln; und

Fig. 20     eine Darstellung gemäß Fig. 18 mit einer erfindungsgemäßen gezielten Berechnung der ange- passten Abtastfrequenz.

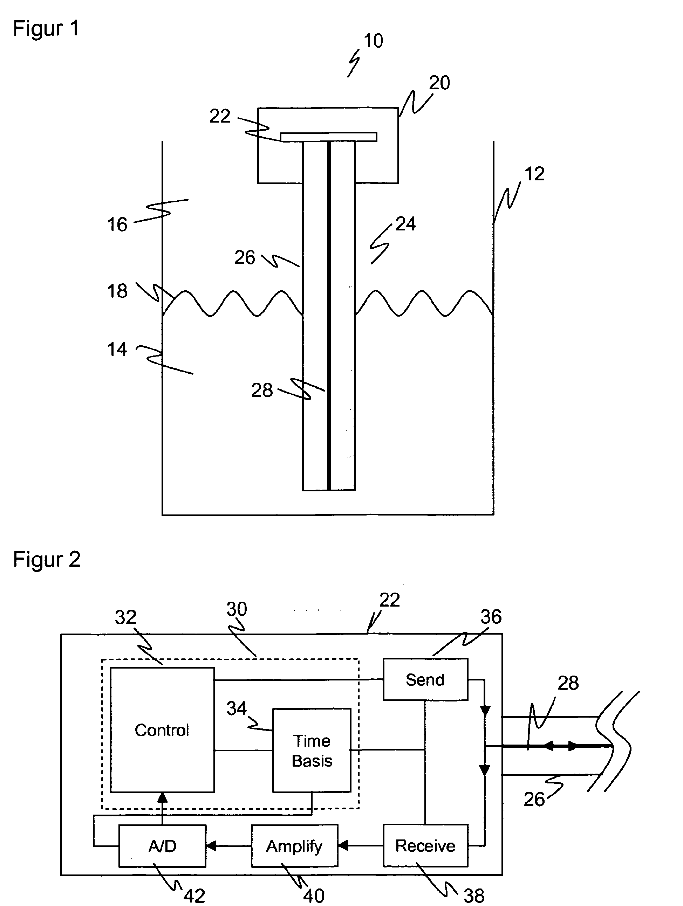

Figur 1 zeigt schematisch einen TDR-Sensor 10, der als Füllstandssensor in einem Tank oder Behälter 12 mit einem Medium oder einer Flüssigkeit 14 angebracht ist. Die Flüssigkeit 14 bildet gegenüber der Luft 16 eine Grenzfläche 18. Der Sensor 10 ist dafür ausgebildet, die Entfernung der Grenzfläche 18 zu ermitteln und daraus sowie aus seiner bekannten Anbringungslage den Füllstand und bei Bedarf anhand der Geometrie des Behälters 12 auch die Menge der Flüssigkeit 14 abzuleiten. Obwohl die Ausbildung des Sensors 10 als Füllstandssensor ein sehr wichtiges Einsatzfeld ist, kann der Sensor 10 prinzipiell auch in anderen Gebieten eingesetzt werden, bei denen eine Grenzfläche zu lokalisieren ist. Dabei ist insbesondere an andere Grenzflächen 18 zu denken, beispielsweise zwischen verschiedenen Flüssigkeiten oder zu und zwischen Schüttgut oder Granulaten.

Der Sensor 10 weist einen Sensorkopf 20 mit einer Steuerung 22 auf, die vorzugsweise auf einer gemeinsamen Platine untergebracht ist. Alternativ sind mehrere über Stecker verbundene Leiterplatten oder Flexprintträger denkbar. An die Steuerung 22 ist eine koaxiale Sonde 24 angeschlossen, welche einen Außenleiter 26 und einen Innenleiter 28 aufweist. Bei einer solchen geschlossenen Sonde 24 werden die elektromagnetischen Signale besonders störungsfrei geführt. Es ist aber auch denkbar, eine andere Sondenform einzusetzen, beispielsweise eine offene Monosonde, die leichter gereinigt werden kann, oder auch gar keine Sonde bei einem Sensor mit Radarprinzip.

Die in dem Sensorkopf 20 vorgesehene Steuerung 22 beziehungsweise ihre Platine ist in Figur 2 in einem Blockschaltbild dargestellt. Die Steuerung 30 ist als Mikroprozessor, Mikrocontroller, FPGA, DSP, ASIC, ein ähnlicher digitaler Logikbaustein oder eine Kombination mehrerer derartiger Bausteine ausgeführt. Neben der eigentlichen Auswertungslogik 32 umfasst die Steuerung 30 eine Zeitbasiseinheit 34 zur Einstellung von Sende- und Abtastzeitpunkten für einen Mikrowellensender 36 und einen Mikrowellenempfänger 38. Alternativ kann die Zeitbasiseinheit 34 einen eigenen Logikbaustein oder Schaltkreis bilden.

Über einen Verstärker 40, möglicherweise in manchen Anwendungen sinnvoller als Dämpfungsglied ausgebildet, und einen Analog-Digitalwandler 42 wird das zeitgedehnte Messsignal an die Auswertungslogik 32 zur Messsignalauswertung geleitet. Bevorzugt ist der Verstärker 40 in der Lage, sich auf den Signalpegel einzustellen und somit unter Ausnutzung der Auflösung des A/D-Wandlers 42 auch kleine Messsignale auswerten zu können, beziehungsweise es wird umgekehrt die Sendeleistung angepasst. Der Verstärker kann auch zugleich als Filter wirken, beispielsweise Tiefpasseigenschaften haben. Weiterhin ist denkbar, den A/D-Wandler 42 in die Steuerung 30 zu integrieren.

Wie ebenfalls einleitend schon beschrieben, wird bei einer Messung ein Puls über den Mikrowellensender 36 auf den Innenleiter 28 gegeben und die Laufzeit des an der Grenzfläche 18 entstehenden und in dem Mikrowellenempfänger 38 empfangenen Reflexpulses gemessen, um den Abstand der Grenzfläche 18 und damit den Füllstand in dem Behälter 12 zu ermitteln.

Die Sendepulse und damit auch die Empfangspulse sind extrem kurz und können von einem üblichen A/D- Wandler 42 nicht oder zumindest nicht mit genügend Auflösung abgetastet werden. Daher erfolgt eine Zeitdehnung des Empfangssignals mit Hilfe der Zeitbasiseinheit 34 durch Einstellen einer geeigneten Zwischenfrequenz mittels Wahl von Sendefrequenz und Abtastfrequenz, damit die Auflösung des A/D-Wandlers für die Digitalisierung ausreicht. Das Grundprinzip der Zeitdehnung wurde bereits einleitend anhand der hinsichtlich der Signalformen vereinfachten Figur 3 erläutert.

Durch das Undersampling entsteht ein beeinträchtigender Aliaseffekt bei hochfrequenten Störern, der nachfolgend anhand der Figuren 4 bis 12 erläutert wird. Eine herkömmliche Aliasfilterung ist nicht möglich, weil so höhere Frequenzabteile abgeschnitten würden, die gerade die wesentliche Messinformation tragen. Dabei sind in den Diagrammen die Einheiten der Zeit beziehungsweise Frequenz auf der X-Achse sowie der Amplitude auf der Y-Achse weitgehend beliebig, da in erster Linie qualitative Effekte veranschaulicht werden sollen. Die Ausdehnung in der X-Achse wurde jeweils in den Zeitdarstellungen so gewählt, dass ein vollständiges Signal von Sendezeitpunkt bis Empfang der letzten Reflexionen umfasst ist, während in den Frequenzspektren der gesamte Nyquistbereich von 0 bis zur halben Abtastfrequenz gezeigt ist.

Figur 4 zeigt zunächst ein Hochfrequenzsignal, also ein ohne Zeitdehnung aufgenommenes Empfangssignal, im ungestörten Fall. Das erste Minimum 44 des Empfangssignals ist der Sendepuls selbst, die gesuchte Reflexion an der Grenzfläche 18 verursacht das erste Maximum 46. Das zweite, ausgeprägtere Maximum 48 ist ein Artefakt vom Ende der Messsonde, wo die gesamte verbleibende Sendeenergie reflektiert wird. Auch die übrigen Extrema sind für die Messung irrelevante weitere Artekfakte im System.

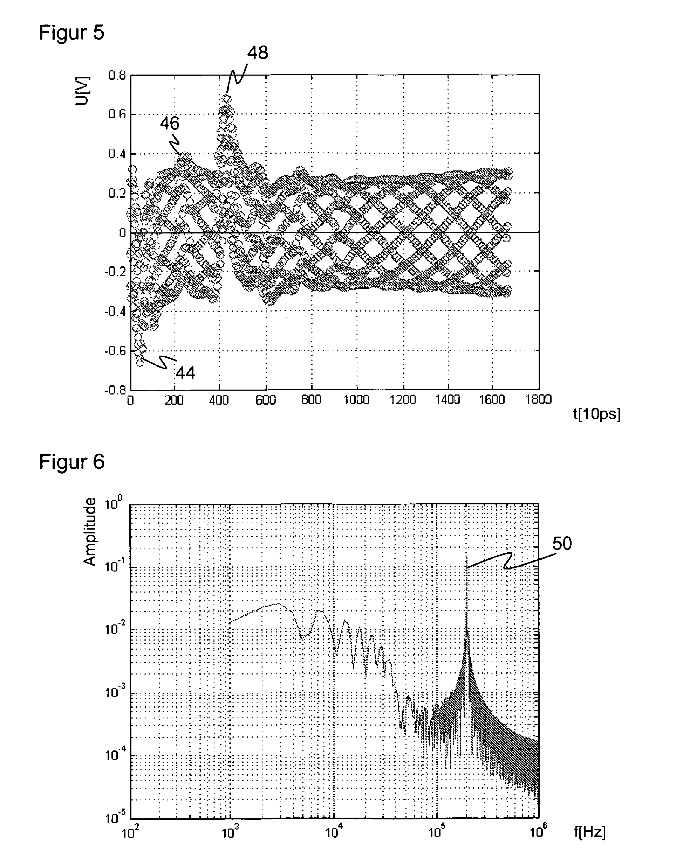

Figur 5 stellt ein Zwischenfrequenzsignal, also ein zeitgedehnt abgetastetes Hochfrequenzsignal, unter Einfluss eines Störers dar. Als Störer wird hier ganz allgemein jegliches elektromagnetisches Feld bezeichnet, beispielsweise aus einem Handy, eine drahtlosen Schnittstelle oder einer anderen Quelle. Deutlich ist eine störende Schwingung erkennbar, deren Frequenz aufgrund des Aliaseffektes in einem hohen Frequenzbereich innerhalb des digitalen Bandes liegt. Dennoch bleiben die Extrema von Sendepuls 44, Messpuls 46 und Artefaktpuls 48 für das Auge gut erkennbar.

Dies illustriert auch das zugehörige Frequenzspektrum der Figur 6. Der Störer 50 liegt als stark ausgeprägtes Extremum am rechten Rand des dargestellten Ausschnitts. Die unregelmäßigen, geschwärzten Bereiche bei hohen Frequenzen sind kein Effekt des Störers 50, sondern hier nicht weiter beachtliche digitale Artefakte des Fourieralgorithmus'. Das Nutzband selbst, also die mittleren dargestellten Frequenzen, ist frei von Störungen.

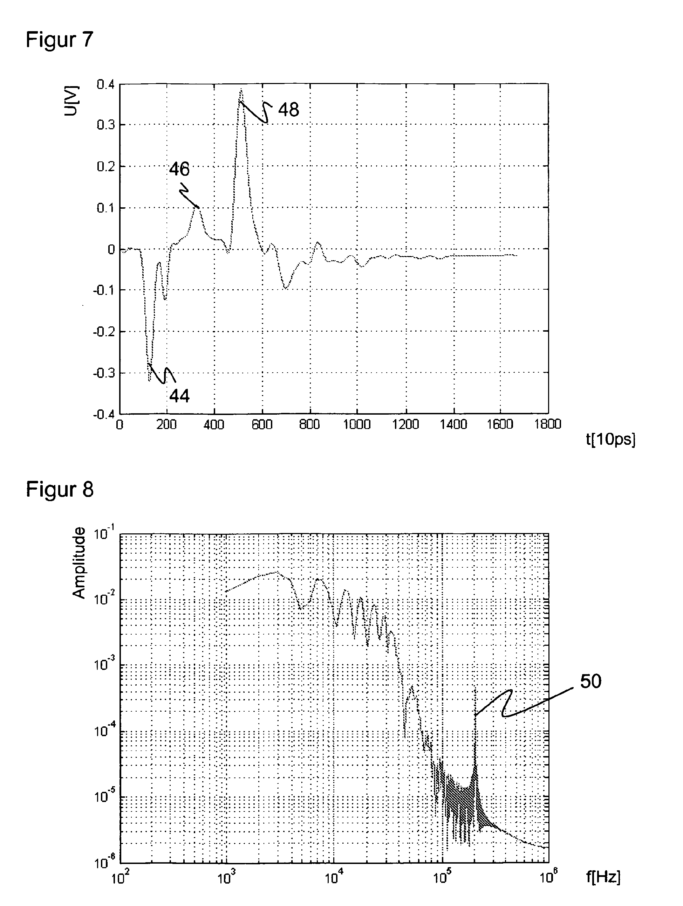

Der Störer lässt sich deshalb auch relativ problemlos durch eine an das Nutzband angepasste Tiefpassfilterung abschneiden. Als Filter ist hier beispielhaft wegen der Anforderung einer konstanten Gruppengeschwindigkeit ein digitaler Tiefpass in FIR-Topologie gewählt, wobei die Eckfrequenz bei 100 kHz bei einer Abtastfrequenz von 2 MHz beträgt. Die Filterung kann analog oder digital durchgeführt werden. Die Figur 7 zeigt das Empfangssignal nach einer solchen Filterung. Der Signalverlauf gleicht weitgehend dem ungestörten Signalverlauf, wie ihn Figur 4 zeigt. In dem zu Figur 7 gehörigen Frequenzspektrum gemäß Figur 8 ist der Störer 50 weiterhin deutlich erkennbar, aber er liegt um Größenordnungen unter seiner ursprünglichen Amplitude und auch weit unterhalb des Pegels des Nutzsignals, so dass er die Messung kaum noch beeinflusst.

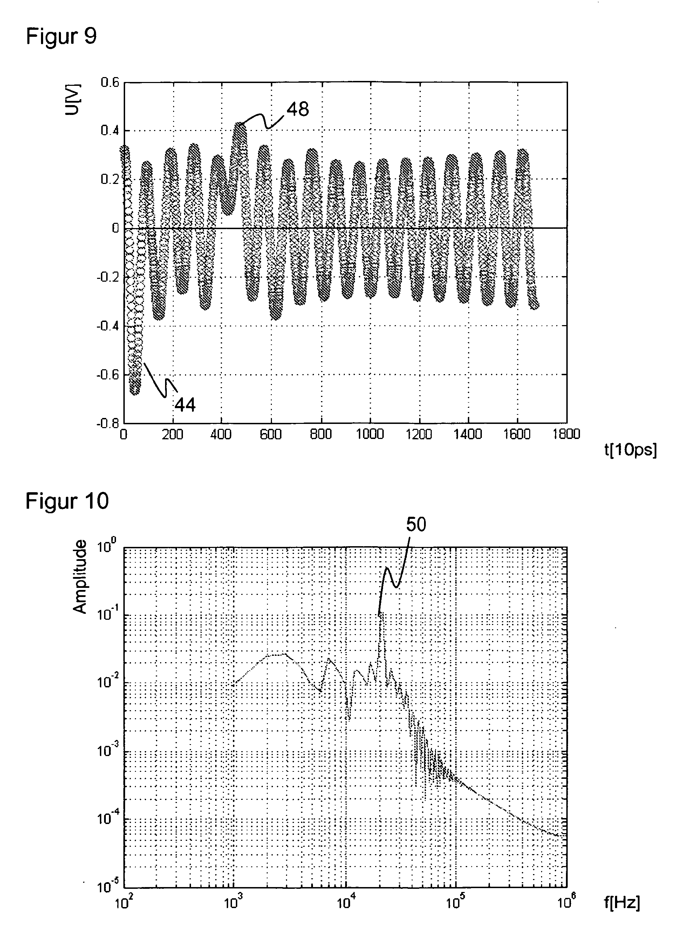

Viel problematischer ist die Situation, wenn ein Störer beim Abtastvorgang Faltprodukte innerhalb des Nutzbandes erzeugt. Einen solchen Signalverlauf zeigt Figur 9. Man erkennt lediglich noch den Sendepuls 44 und den Artefaktpuls 48. Der Messpuls 46 ist nicht erkennbar. Wie auch das zugehörige Frequenzspektrum in Figur 10 illustriert, dominiert der Störer 50 nun das Nutzband.

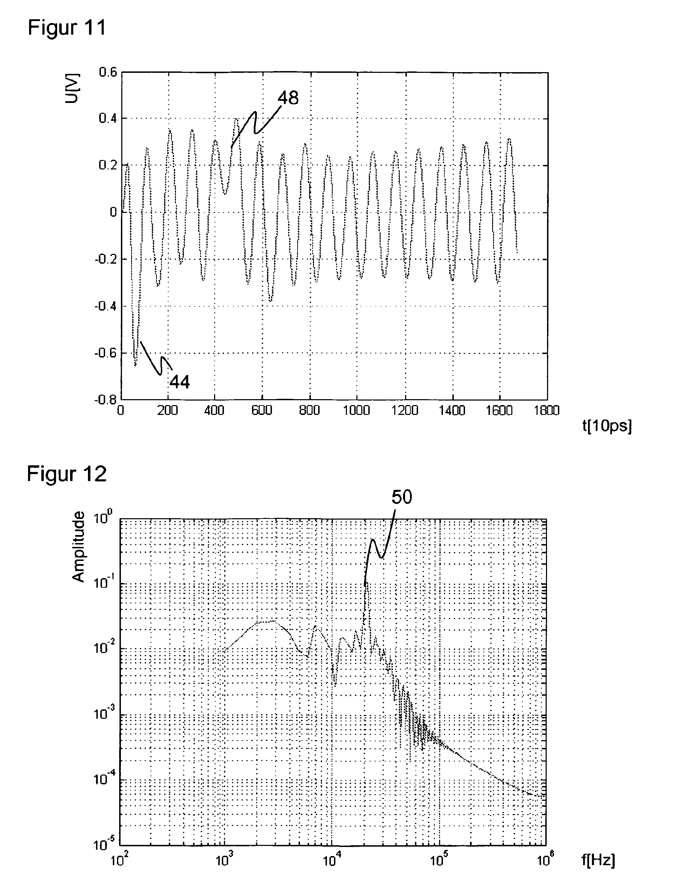

Da der Störer 50 innerhalb des Nutzbandes liegt, bringt eine Tiefpassfilterung mit einem auf das Nutzband abgestimmten Filter keinen Gewinn, weil das Filter innerhalb des Nutzbandes keine Dämpfung bewirken darf, um das Messsignal nicht zu verfälschen. Dementsprechend ist die Situation nach Filterung, wie sie Figur 11 im Signalverlauf und Figur 12 im zugehörigen Frequenzspektrum zeigt, nicht verbessert. Aus einem solchen Signal lässt sich die gesuchte Reflexion 46 an der Grenzfläche 18 nicht mehr zuverlässig extrahieren.

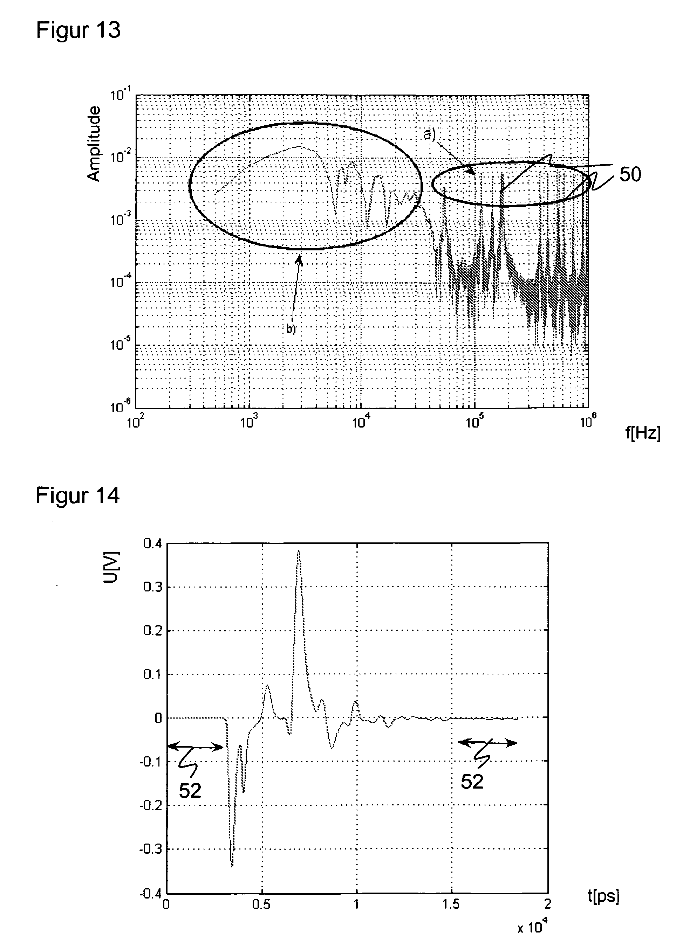

Erfindungsgemäß wird deshalb die Abtastfrequenz gewechselt, um zu verhindern, dass ein Störer 50 das Nutzband verfälscht oder gar dominiert. Figur 13 zeigt das Summensignal einer Ausführungsform, bei der nacheinander eine Vielzahl von digitalen Empfangssignalen erzeugt und als Summensignal überlagert werden, wobei jeweils das Sendesignal als Referenz verwendet wird, um die zu überlagernden Signale zueinander auszurichten. Dabei wird mit jeder Wiederholung die Abtastfrequenz verändert, was dazu führt, dass sich die Lage von Faltprodukten im digitalen Band aufgrund eines Störers 50 mit den Wiederholungen verschiebt. Das Muster der Abtastfrequenzsprünge kann deterministisch oder (pseudo)zufällig sein.

In der mit a) bezeichneten Region der Figur 13 sind die verschiedenen Lagen des Störers 50 in den einzelnen Wiederholungen erkennbar. Da die Messbedingungen zumindest über die kurze Zeit, welche die Messwiederholungen benötigen, stationär oder quasistationär sind, liefert das Nutzsignal im Bereich b) in jeder Wiederholung denselben Beitrag. Eine Scharmittelung drückt daher die Störer in einem Maße in den Hintergrund, das hauptsächlich von der Anzahl der Wiederholungen abhängt. Die Energie des Messsignals nimmt relativ zu, während die Energie zwar nicht aller Störungen zusammen, wohl aber jeder einzelnen Störung in einer Wiederholung relativ abnimmt.

Mit einer Änderung der Abtastfrequenz wird möglicherweise auch der Zeitdehnfaktor geändert. Der Zeitdehnfaktor errechnet sich aus $kT = |F_S / (F_E-F_S)|$. Deshalb müssen bei der Summenbildung die einzelnen Signale mit zusätzlichem Rechenaufwand auf einen gemeinsamen Maßstab umgerechnet werden. Auch die Realisierung analoger Filter für die Zwischenfrequenz wird schwierig, da sich die Bandbreite des Zwischenfrequenzsignals ändert. Man könnte dem auch begegnen, indem die Filter angepasst werden. Dabei bietet sich als Alternative zu aufwändigen einstellbaren analogen Filtern an, in der analogen Vorverarbeitung nur einfache Filterungen auszuführen oder ganz auf analoge Filter zu verzichten und die Filterung digital durchzuführen. Hier wäre der Aufwand zur Realisierung angepasster Filter erheblich verringert.

Besser ist, mit der Abtastfrequenz auch die Sendefrequenz zur gezielten Einstellung einer gewünschten Zwischenfrequenz zu verändern und dabei den Zeitdehnfaktor konstant zu halten. Dann haben die einzelnen Signale denselben Maßstab, und auch die Filteranpassung wird vereinfacht oder entfällt.

Die Wechsel der Abtastfrequenz dienen dazu, das Störspektrum zu verteilen. Ist es von Anfang an verschmiert, so wird es durch die Wechsel weiter verbreitert. Die Grenze ist ein gaussischer Störer, der nicht weiter verteilt werden kann und muss. Hier genügt bloße Scharmittelung ohne Frequenzwechsel.

Erfindungsgemäß ist vorgesehen, den Störer 50 gezielt aus dem Nutzband zu verschieben. Das ist häufig noch effektiver als eine Scharmittelung, weil weniger Wiederholungen erforderlich sind. Mit einer Verschiebung soll die günstige Situation mit einem Störer 50, dessen Faltprodukte nur außerhalb des Nutzbandes liegen und die im Zusammenhang mit den Figuren 5 bis 8 erläutert wurde, auch dann erreicht werden, wenn ursprünglich eine ungünstige Situation vorliegt, wo der Störer 50 Faltprodukte im Nutzband erzeugt, wie dies im Zusammenhang mit den Figuren 9 bis 12 erläutert wurde. Danach ist eine Filterung zur Beseitigung der Aliasartefakte immer möglich.

Dazu wird zunächst festgestellt, wo der Störer 50 im digitalen Band liegt, beispielsweise mit einem fast frequency estimation algorithm (ffea) wie dem Burg-Algorithmus, über eine Autokorrelation oder eine FFT. Figur 14 zeigt einen Empfangssignalverlauf mit typischen Ruhephasen vor und nach jeder Einzelmessung. In den mit Doppelpfeilen 52 bezeichneten Zeitintervallen können Störer 50 leicht detektiert werden, weil hier kein überlagerndes Nutzsignal auftritt. Derartige Ruhephasen können auch künstlich eingeführt werden, oder es wird ein Signalverlauf ohne Sendepuls nur mit dem Ziel aufgezeichnet, einen Störer 50 zu identifizieren. Abweichend kann versucht werden, Informationen über Störer 50 aus der Überlagerung zu extrahieren.

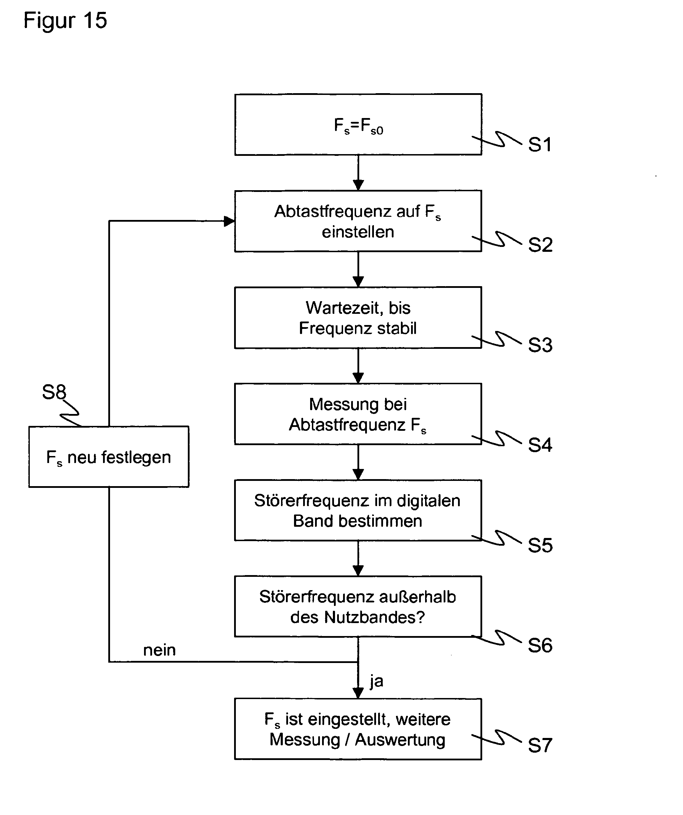

Figur 15 zeigt ein Ablaufdiagramm, um eine angepasste Frequenz $F_S$ aufzufinden, bei welcher der Störer 50 Faltprodukte nur außerhalb des Nutzbandes erzeugt. Dazu wird in einem ersten Schritt S1 eine anfängliche Abtastfrequenz unabhängig von einem noch unbekannten Störer 50 $F_{S0}$ gewählt. In einem zweiten Schritt S2 wird von der Steuerung 30 mittels der Zeitbasis 34 die Abtastfrequenz auf $F_S$ eingestellt und in einem dritten Schritt S3 gewartet, bis die eingestellte Frequenz stabil ist. Anschließend wird eine Messung ausgeführt, also mehrfach ein Sendepuls ausgesandt und zur Gewinnung eines zeitgedehnten digitalen Empfangssignals mit der Abtastfrequenz $F_S$ abgetastet.

In einem fünften Schritt S5 wird die Frequenz des Störers 50 im digitalen Band geschätzt. Ergibt sich bei Prüfung in einem sechsten Schritt S6, dass der Störer bereits außerhalb des Nutzbandes liegt, so muss kein Frequenzwechsel erfolgen. Die gewählte Frequenz $F_S$ ist die gesuchte angepasste Frequenz und wird in einem siebten Schritt S7 verwendet, um weitere Messdaten aufzuzeichnen, beziehungsweise die bereits aufgezeichneten Messdaten werden ausgewertet, um die Entfernung der Grenzfläche 18 zu bestimmen.

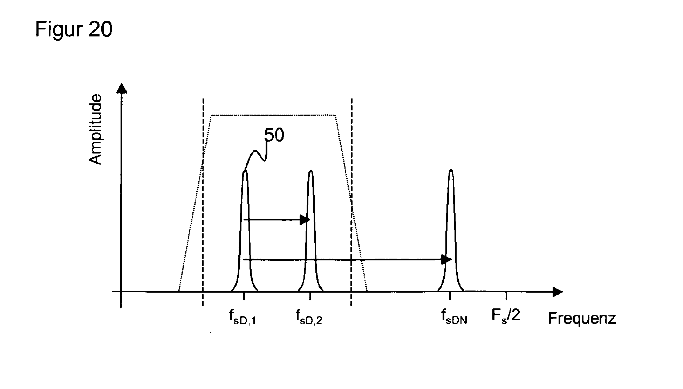

Ergibt sich dagegen im Schritt S6, dass die Störerfrequenz nicht außerhalb des Nutzbandes liegt, so wird die Abtastfrequenz gewechselt, indem $F_S$ neu festgelegt wird. Dafür sieht die Erfindung ein Verfahren vor, das weiter unten im Zusammenhang mit Figur 20 näher erläutert wird.

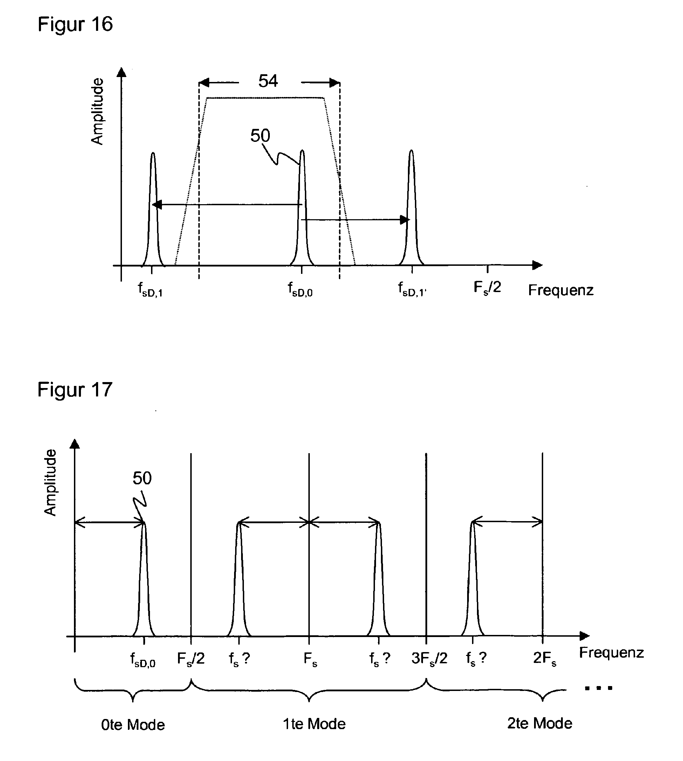

Figur 16 zeigt das Ergebnis der Messaufnahme bei der angepassten Abtastfrequenz $F_s$. In einem sehr vereinfachten Frequenzspektrum ist der Nyquistbereich von 0 bis $F_s/2$ gezeigt. Dieser Bereich wird in dieser Beschreibung häufig als das digitale Band bezeichnet, da aufgrund des Abtasttheorems nur Frequenzen innerhalb des digitalen Bandes zuverlässig bestimmbar sind und darüber hinausgehende Frequenzinformationen zunächst nicht digital verfügbar sind.

Innerhalb des digitalen Bandes liegt mit gestrichelten Linien abgegrenzt das Nutzband 54. Dieser Frequenzbereich entspricht demjenigen, in dem die wesentlichen Messinformationen über den an der Grenzfläche 18 reflektierten Puls 46 enthalten sind und der beispielsweise in Figur 13 mit b) bezeichnet ist.

Liegt nun ein Faltprodukt eines Störers 50 anfänglich im digitalen Band bei einer Frequenz $f_{sD,0}$, so entspricht das der ungünstigen Situation der Figuren 9 bis 12. Nachdem das Verfahren gemäß 15 durchgeführt wurde, ist sichergestellt, dass die Faltprodukte entweder am linken Rand, etwa bei $f_{sD,1}$, oder am rechten Rand, etwa bei $f_{sD,1'}$ und damit außerhalb des Nutzbandes liegen. Das ist die angestrebte günstige Situation der Figuren 5 bis 8, in denen der Störer 50 durch einen Hoch- beziehungsweise Tiefpass ausgefiltert werden kann.

Der Zusammenhang zwischen der Lage von Faltprodukten des Störers 50 im digitalen Band und der Abtastfrequenz ist nicht ganz trivial und aus einer einzelnen Messung auch nicht eindeutig zu ermitteln. Die angepasste Abtastfrequenz wird deshalb erfindungsgemäß durch eine zweite Messung berechnet.

Dazu erläutert zunächst Figur 17 einige Hintergründe. Die Lage $f_{sD,0}$ des Störers 50 im digitalen Band, das sich bis zur Nyquistfrequenz $F_s/2$ erstreckt, lässt Mehrdeutigkeiten zu, die hier als Oberwellenmoden bezeichnet sind. Dabei ist die 0te Oberwellenmode der Nyquistbereich, während sich die n-te Oberwellenmode von $(2n-1)F_s/2$ bis $(2n+1)F_s/2$ erstreckt. Die tatsächliche Lage des Störers 50 kann nicht nur um jeweils eine beliebige, unbekannte Oberwellenmode versetzt sein, sondern auch noch innerhalb jeder Oberwellenmode an deren Mittelachse bei $nF_s$ gespiegelt sein. Es ist wegen dieser vielfachen Mehrdeutigkeit weitgehend unvorhersagbar, wohin sich ein Störer 50 bei einem einfachen Wechsel der Abtastfrequenz bewegt.

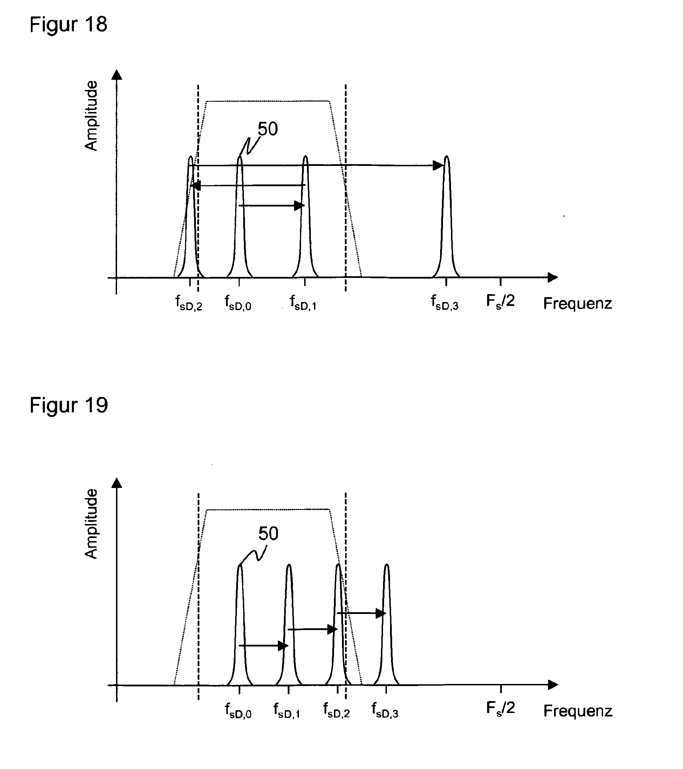

Die Figur 18 erläutert ein vergleichbares Verfahren, um die angepasste Abtastfrequenz iterativ aufzufinden. Dabei folgt dieses Verfahren dem Ablaufschema der Figur 15. Im Schritt S8 wird $F_s$ jeweils zufällig, pseudozufällig oder nach einer vorgegebenen Sequenz neu festgelegt. Jeder dieser Frequenzwechsel führt zu einer weitgehend beliebigen Verschiebung der Lage $f_{sD}$ des Störers 50 im digitalen Band, wobei im Beispiel der Figur 18 drei derartige, mit Pfeilen illustrierte Verschiebungen erforderlich waren, um außerhalb des Nutzbandes zu liegen zu kommen.

Wenn das Nutzband zumindest einen merklichen Bereich des digitalen Bandes freilässt, wird dieses Verfahren nach wenigen Frequenzwechseln zu einer geeigneten angepassten Abtastfrequenz führen. Im Beispiel der Figur 13 ist mit b) das Nutzband angedeutet und umfasst, wenn man die logarithmische Auftragung der X-Achse berücksichtigt, nur einen kleinen Bruchteil des digitalen Bandes. In aller Regel wird deshalb der Störer 50 entweder von vorneherein oder schon beim ersten Wechsel nicht im Nutzband liegen. Aus dieser geringen Wahrscheinlichkeit darf man aber nicht schließen, dass die erfindungsgemäße Möglichkeit des Frequenzwechsels nur selten benötigt wird. Wenn nämlich ein Störer auch nur in der Minderheit der Fälle im Nutzband liegt, ist der Sensor 10 dann doch weitgehend nicht einsatzfähig, und das ist in der Praxis nicht hinnehmbar.

Figur 19 erläutert ein weiteres iteratives Verfahren zum Auffinden der angepassten Abtastfrequenz. Im Unterschied zu der Ausführungsform gemäß Figur 18 wird hier nicht zufällig, pseudozufällig oder nach einer vorgegebenen Sequenz die Abtastfrequenz gewechselt, sondern jeweils um ein konstantes $\Delta F_s$. Dabei verschiebt sich die Lage $f_{sD,0}$ des Störers im digitalen Band beständig weiter, bis der Störer das Nutzband verlässt. Durch Vorgabe von $\Delta F_s$ ist allerdings weder Richtung noch Betrag der jeweiligen Verschiebung von $f_{sD}$ bekannt, da dies von der unbekannten tatsächlichen Störerfrequenz abhängt. Sicher ist aber, dass der Störer durch iterative Vervielfachung der unbekannten Verschiebung nach endlicher Schrittzahl das Nutzband verlassen wird.

Im Gegensatz zu den beschriebenen iterativen Verfahren ist es erfindungsgemäß möglich, Kenntnis über die tatsächliche Störerfrequenz zu gewinnen und daraus gezielt die angepasste Frequenz zu berechnen. Es besteht die folgende Abhängigkeit, wenn man eine Lage $f_{sDN}$ vorgibt, wo der Störer im digitalen Band liegen soll, also beispielsweise am rechten oder linken Rand außerhalb des Nutzbandes:

$$F_{SN} = \begin{cases} \dfrac{nF_{s0} + f_{sD0} - f_{sDN}}{n}, & nF_s \leq f_s < \dfrac{2n+1}{2}F_s \\[2mm] \dfrac{f_{sDN} + (n+1)F_{S0} - f_{SD0}}{n+1}, & \dfrac{2n+1}{2}F_s \leq f_s < (n+1)F_s \end{cases}$$

mit:

$F_{s0}$: Abtastfrequenz der Messung;
$F_{SN}$: angepasste Abtastfrequenz;
$f_{sD0}$: Störerfrequenz im digitalen Band, abgetastet mit $F_{s0}$;
$f_{sDN}$: Störerfrequenz im digitalen Band, abgetastet mit angepasster Abtastfrequenz;
$f_s$: tatsächliche oder absolute Lage des Störers im analogen Band und
$n$: Oberwellenmode von $f_s$.

Die Fallunterscheidung ist wegen der Spiegelspektren erforderlich, um danach zu differenzieren, ob die tatsächliche Störerfrequenz $f_s$ in ihrer n-ten Mode unterhalb oder oberhalb von der Mitte $nF_s$ der Mode liegt. Die tatsächliche Störfrequenz $f_s$ ist weiterhin unbekannt. Es muss zumindest noch eine von der tatsächlichen Störfrequenz $f_s$ abhängige Information für diese Fallunterscheidung sowie deren unbekannte Oberwellenmode n berechnet werden.

Dazu wird die Lage $f_{sD}$ des Störers im digitalen Band zweifach als $f_{sD1}$, $f_{sD2}$ bei verschiedenen Abtastfrequenzen $F_{s1}$, $F_{s2}$ bestimmt. Dann ergibt sich

$$n = \frac{f_{sD1} - f_{sD2}}{F_{S1} - F_{S2}}.$$

Die Information für die Fallunterscheidung steckt in dem Vorzeichen von n.

Diese Lösung ist aber nicht allgemein. Der Wert der Oberwellenmode n lässt sich noch nicht eindeutig festlegen, weil nicht klar ist, ob $f_{sD}$ bezüglich beider Frequenzen $F_{s1}$, $F_{s2}$ in derselben Oberwellenmode liegt. Dann wären aber die beiden Gleichungen für n, aus denen das obige Ergebnis abgeleitet ist, in Wahrheit Gleichungen für zwei verschiedene n1 und n2, und das Gleichungssystem ist unterbestimmt. Dadurch würde auch im Term $f_{sD1}-f_{sD1}$ möglicherweise ein nicht erkannter Vorzeichenwechsel auftreten und deshalb die Fallunterscheidung falsch aufgelöst. Dies lässt sich grundsätzlich mit einigem Aufwand auflösen, indem weitere Messungen bei nochmals verschiedenen Abtastfrequenzen vorgenommen werden. Dabei wird abgeschätzt, ob die unter jeweils verschiedenen Abtastfrequenzen ermittelten Oberwellenmoden n1, n2,... nahe genug beieinander liegen, um den verbleibenden Fehler tolerieren zu können, etwa weil er im Rahmen ohnehin vorhandener Mess- oder Digitalisierungsfehler liegt.

Wesentlich einfacher ist aber, erfindungsgemäß die Randbedingung zu erzwingen, dass beim Wechsel der Abtastfrequenz gar kein Wechsel der Oberwellenmode stattfindet. Dazu muss nur die Differenz $\Delta F = F_{s1} - F_{s2}$ klein genug gewählt werden. Wenn man sich auf die Eliminierung von Störern bis zu einer Grenzfrequenz $f_{smax}$ beschränkt, beispielsweise bis 3 GHz, bis 10 GHz oder jede andere feste Größe, so ist damit auch eine obere Schranke für die maximale Oberwellenmode mit $n_{max} <= 2 f_{smax} / F_{SN}$ gegeben. Mit einem Abtastfrequenzwechsel von höchstens $\Delta F/n_{max}$ ist damit die Randbedingung erfüllt. Die Fallunterscheidung löst sich danach, ob sich die digitale Störerfrequenz $f_{sD}$ bei Vergrößerung der Abtastfrequenz $F_s$ vergrößert oder nicht, und entsprechend bei Verkleinerung.

Damit sind die oben angegebenen Gleichungen für die Berechnung der angepassten Abtastfrequenz $F_{SN}$ anwendbar. Dabei spielt es im Übrigen auch keine Rolle, wenn die Oberwellenmode doch knapp verlassen wird. Der Fehler in $F_{SN}$ und damit in $f_{sDN}$ ist dann immer noch so klein, dass $f_{sDN}$ außerhalb des Nutzbandes liegt. Wenn das Nutzband nur einen Teil des digitalen Bandes besetzt, sind sogar größere Fehler ohne Effekt, da man eine Solllage $f_{sDN}$ des Störers im digitalen Band mit großem Abstand zum Nutzband vorgeben kann, beispielsweise nahe der Nyquist-Frequenz.

Unter Einhaltung der erfindungsgemäßen Randbedingung ist aber das Wissen über die Oberwellenmode und damit letztlich die tatsächliche Frequenz des Störers 50 gar nicht zwingend erforderlich, um einen geschlossenen Algorithmus angeben zu können. Dies ist in Figur 20 illustriert. Nach einem Wechsel der Abtastfrequenz um ein $\Delta F$, welches weitgehend beliebig ist, soweit es nur die genannte Randbedingung erfüllt, wird die Differenzfrequenz $\Delta f = f_{sD,1} - f_{sD,2}$ berechnet, und zwar vorzeichenbehaftet, um auch die Richtung der Verschiebung zu behalten. Zugleich berechnet man, welche Verschiebung eigentlich erforderlich gewesen wäre, also $_\Delta f_{SN} = f_{sDN} - f_{sD,1}$. Der Quotient dieser beiden Verschiebungen liefert dann einen Skalierungsfaktor, um den die Abtastfrequenz $F_{s,1}$ korrigiert wird, um die angepasste Abtastfrequenz zu erhalten.

Bis hierher wurde es jeweils als gleichwertig betrachtet, ob der Störer an den linken Rand unterhalb oder an den rechten Rand oberhalb des Nutzbandes verschoben wird. Es gibt aber Vorteile, den linken Rand zu wählen. Je nach Spektrum des eingesetzten Hochfrequenzsignals sind kaum Anteile bei kleinen Frequenzen vorhanden, oder die kleinen Frequenzen können ohne größere Nachteile analog oder digital ausgefiltert werden.

Dabei besteht ein Vorteil darin, dass Slew-Rate-Effekte des Verstärkers 40 vermieden oder reduziert werden. Der Grund liegt darin, dass von dem Verstärker 40 im linken Rand des digitalen Bandes wesentlich größere Störspannungen toleriert werden. Ein Störer in diesem Bereich führt also keine oder weniger störende Oberwellen in das Messsignal ein. Ein weiterer Vorteil ist, dass zumeist in dem Sensor 10 eine ohnehin vorhandene Offsetregelung vor dem Eingang des Verstärkers 40 eine gewisse Hochpassfilterwirkung hat. Ein an den linken Rand gedrängter Störer erreicht damit, wenigstens teilweise, den Verstärker 40 gar nicht erst, so dass ein größerer Dynamikbereich für die Verstärkung des Signals statt für die Verstärkung des Störers verfügbar ist. Somit wird insgesamt eine bessere Verstärkung erzielt, oder es kann bei gleichwertiger Verstärkung ein kostengünstigeres Bauteil für den Verstärker 40 verwendet werden.

Obwohl die Erfindung anhand von verschiedenen Ausführungsformen jeweils unter Bezugnahme auf zugehörige Zeichnungen beschrieben sind, so umfasst die Erfindung auch Mischformen von Merkmalen aus diesen Ausführungsformen. Beispielsweise sind die diversen beschriebenen Filterungen oder ein Wechsel auch der Sendefrequenz mit der Abtastfrequenz nicht auf diejenige Ausführungsform beschränkt, in deren Zusammenhang sie beschrieben wurden, sondern ebenso bei den übrigen Ausführungsformen einsetzbar.

Ein weiterer Grund, die Frequenz zu wechseln, besteht darin, Teile des Messsignals mit höherer Auflösung zu erfassen. Ein hoher Zeitdehnungsfaktor liefert sehr genaue Messkurven und verringert damit nachträglichen Aufwand bei der Interpolation. Andererseits würde eine hochaufgelöste Aufzeichnung über die gesamte Messperiode sehr große Datenmengen erzeugen, die mit einer kostengünstigen Steuerung 30 nicht ohne Weiteres bearbeitet werden können. Das gilt besonders bei Anwendungen mit großen Messbereichen, beispielsweise bei Füllstandsmessungen in Silos mit Seilsonden von mehreren 10 Metern Länge. Erfindungsgemäß wird zunächst mit einem kleineren Zeitdehnungsfaktor, somit einer groberen Auflösung und geringeren Datenmenge, der gesamte Messbereich aufgezeichnet. Darin werden die interessierenden Bereiche des Messpulses 46 detektiert und anschließend nur diese Bereiche erneut mit einem hohen Zeitdehnungsfaktor erfasst. Durch die Beschränkung auf interessierende Bereiche bleibt die Datenmenge trotz der erhöhten Auflösung von der Steuerung 30 verarbeitbar. Mit dem so verringerten Rechenaufwand wird auch die Leistungsaufnahme reduziert. Dies ist beispielsweise in energielimitierten Geräten mit Zweileiter-Hart-Interface vorteilhaft.

**Patentansprüche**

1. Verfahren zur Messung der Entfernung zu einer Grenzfläche (18), insbesondere zur Bestimmung eines Füllstandes, wobei mittels eines Senders (36) und eines Empfängers (38) ein zeitgedehntes digitales Empfangssignal gewonnen wird, indem ein elektromagnetisches Signal, insbesondere ein Mikrowellensignal, wiederholt mit einer Sendefrequenz ausgesandt, das empfangene Reflexionssignal mit einer Abtastfrequenz ungleich der Sendefrequenz abgetastet und aus dem abgetasteten Empfangssignal die Entfernung der Grenzfläche (18) anhand der Laufzeit an der Grenzfläche (18) reflektierter Signalanteile (46) bestimmt wird, wobei die Abtastfrequenz wechselbar ist, um elektromagnetische Störer (50) zu unterdrücken oder elektromagnetischen Störern (50) auszuweichen,
**dadurch gekennzeichnet,**
**dass** die Frequenz eines Störers (50), insbesondere des energiereichsten Störers (50), im digitalen Band zwischen 0 Hz und der halben Abtastfrequenz geschätzt wird, und eine angepasste Abtastfrequenz so eingestellt wird, dass der Störer (50) außerhalb eines Nutzbandes (54), insbesondere am oberen oder unteren Rand des digitalen Bandes zu liegen kommt,
wobei die angepasste Abtastfrequenz wie folgt aufgefunden wird:

- Schätzen einer ersten Störerfrequenz des Störers (50) im digitalen Band bei einer ersten Abtastfrequenz;
- Schätzen einer zweiten Störerfrequenz des Störers (50) im digitalen Band bei einer um eine Differenzabtastfrequenz von der ersten Abtastfrequenz verschiedenen zweiten Abtastfrequenz;
- Bestimmen eines Skalierungsfaktors aus dem Differenzbetrag von erster und zweiter Störerfrequenz und;
- Festlegen der angepassten Abtastfrequenz mittels des Skalierungsfaktors und der Differenzabtastfrequenz,

wobei die Differenzabtastfrequenz so klein gewählt ist, dass der Störer (50) sowohl für die erste Abtastfrequenz als auch für die zweite Abtastfrequenz bis zu einer vorgegebenen maximalen Störerfrequenz in derselben Oberwellenmode liegt.

2. Verfahren nach Anspruch 1,
wobei das zeitgedehnte digitale Empfangssignal mehrfach mit jeweils einer anderen Abtastfrequenz gewonnen wird, die zufällig oder pseudozufällig gewählt ist und die Laufzeit aus einer Scharmittelung der mehrfach gewonnenen Empfangssignale bestimmt wird.

3. Verfahren nach einem der vorhergehenden Ansprüche,
wobei in einem ersten Schritt eine Messung über einen maximalen Messbereich mit einer ersten Abtastfrequenz und einer ersten Sendefrequenz, die einen ersten Zeitdehnungsfaktor ergeben, und anschließend in einem zweiten Schritt eine Messung nur über den Teilbereich des Messbereichs, in dem die an der Grenzfläche reflektierten Signalanteile liegen, mit einer zweiten Abtastfrequenz und einer zweiten Sendefrequenz ausgeführt wird, die einen zweiten Zeitdehnungsfaktor ergeben, welcher größer als der erste Zeitdehnungsfaktor ist.

4. Verfahren nach einem der vorhergehenden Ansprüche,
wobei bei einem Wechsel der Abtastfrequenz auch die Sendefrequenz gewechselt wird, insbesondere um bei einem Frequenzwechsel einen Zeitdehnfaktor konstant zu halten.

5. Sensor (10), insbesondere Füllstandssensor, mit einem Sender (36) und einem Empfänger (38) zum Aussenden und Empfangen eines elektromagnetischen Signals, insbesondere eines Mikrowellensignals sowie mit einer Steuerung (30, 32, 34), welche dafür ausgebildet ist, die Entfernung einer Grenzfläche (18) mit einem Verfahren nach einem der Ansprüche 1 bis 4 zu bestimmen.

6. Sensor (10) nach Anspruch 5,
wobei ein Filter vorgesehen ist, um Signale außerhalb eines Nutzbandes (54) abzuschneiden und/oder wobei ein Filter vorgesehen ist, um Frequenzen von Störern (50) zu unterdrücken.

7. Sensor (10) nach Anspruch 5 oder 6,
wobei eine DDS (34) oder eine PLL-Struktur (34) vorgesehen ist, um Abtastfrequenzen und/oder Sendefrequenzen einzustellen.

8. Sensor (10) nach einem der Ansprüche 5 bis 7,
der als Radarsensor ausgebildet ist, oder der nach dem TDR-Prinzip arbeitet, wobei eine Monosonde, eine Doppelsonde oder eine Koaxialsonde (24) zur Führung des Signals vorgesehen ist.

**Claims**

1. A method for measuring the distance to a boundary surface (18), in particular for determining a fill level, wherein a time stretched digital reception signal is generated by means of a transmitter (36) and a receiver (38) by repeatedly transmitting an electromagnetic signal, in particular a microwave signal, with a transmission frequency, sampling the received reflection signal with a sampling frequency different from the transmission frequency, and determining the distance of the boundary surface (18) from the sampled reception signal from a time of flight of signal portions (46) reflected at the boundary surface (18), wherein the sampling frequency can be changed to suppress electromagnetic sources of interference (50) or to evade electromagnetic sources of interference (50),

   **characterized in that**

   the frequency of a source of interference (50), in particular the most powerful source of interference (50), is estimated in a digital band between 0 Hz and half the sampling frequency, and an adapted sampling frequency is set such that the source of interference (50) is outside a useful band (54), in particular at the upper or lower boundary of the digital band, wherein the adapted sampling frequency is determined as follows:

   - estimating a first interference frequency of the source of interference (50) in the digital band at a first sampling frequency;
   - estimating a second interference frequency of the source of interference (50) in the digital band at a second sampling frequency differing from the first sampling frequency by a difference sampling frequency;
   - determining a scaling factor from the absolute difference of first and second interference frequency; and
   - determining the adapted sampling frequency by means of the scaling factor and the difference sampling frequency,

   wherein the difference sampling frequency is selected so low that the source of interference (50) is within the same harmonic mode both for the first sampling frequency and for the second sampling frequency up to a preset maximum interference frequency.

2. The method according to claim 1,
   wherein the time stretched digital reception signal is generated several times each with a different sampling frequency that is selected at random or pseudo-random, and wherein the time of flight is determined by an averaging of the multiple generated reception signals.

3. The method according to any of the previous claims,
   wherein in a first step a measurement is carried out over a maximum measurement range with a first sampling frequency and a first transmission frequency resulting in a first time stretch factor, and subsequently in a second step a measurement is carried out over only a portion of the measurement range in which the signal portions reflected at the boundary surface are located, with a second sampling frequency and a second transmission frequency resulting in a second time stretch factor being greater than the first time stretch factor.

4. The method according to any of the previous claims,
   wherein, when changing the sampling frequency, the transmission frequency is also changed, in particular to keep a time stretch factor constant at a frequency change.

5. A sensor (10), in particular a fill level sensor, having a transmitter (36) and a receiver (38) for the transmission and reception of an electromagnetic signal, in particular a microwave signal, and having a control (30, 32, 34) configured to determine the distance of a boundary surface(18) with a method according to any of the claims 1 to 4.

6. The sensor (10) of claim 5,
   wherein a filter is provided to cut off signals outside a useful band (54) and/or wherein a filter is provided to suppress frequencies of sources of interference (50).

7. The sensor (10) according to claim 5 or 6,
   wherein a DDS (34) or a PLL structure (34) is provided to set sampling frequencies and/or transmission frequencies.

8. The sensor (10) according to any of claims 5 to 7,
   the sensor (10) being configured as a radar sensor, or the sensor (10) working according to the TDR principle, wherein a mono probe, a double probe or a coaxial probe (24) for guiding the signal is provided.

**Revendications**

1. Procédé pour la mesure de la distance jusqu'à une surface limite (18), en particulier pour la détermination d'un état de remplissage, dans lequel, au moyen d'un émetteur (36) et d'un récepteur (18) on récupère un signal de réception numérique allongé dans le temps, en ce que l'on émet un signal électromagnétique, en particulier un signal à micro-ondes, de façon répétée avec une fréquence d'émission, en ce que l'on balaye le signal de réflexion reçu avec une fréquence de balayage différente de la fréquence d'émission, et on détermine à partir du signal reçu balayé la distance de la surface limite (18) au moyen du temps de parcours de la part de signal (46) réfléchie au niveau de la surface limite (18), dans lequel la fréquence de balayage peut être changée afin de supprimer des perturbations électromagnétiques (50) ou de s'écarter de perturbations électromagnétiques (50),
   **caractérisé en ce que**
   la fréquence d'une perturbation (50), en particulier de la perturbation (50) présentant la plus forte énergie, est estimée dans la gamme numérique entre 0 Hz et la moitié de la fréquence de balayage, et on établit une fréquence de balayage ajustée de telle façon que la perturbation (50) tombe à l'extérieur d'une gamme utile (54), en particulier à la bordure supérieure ou à la bordure inférieure de la gamme numérique,
   dans lequel la fréquence de balayage ajustée est obtenue de la manière suivante :

   - on estime une première fréquence de perturbation (50) dans la gamme numérique pour une première fréquence de balayage ;
   - on estime une seconde fréquence de perturbation (50) dans la gamme numérique pour une seconde fréquence de balayage qui diffère de la première fréquence de balayage à raison d'une fréquence de balayage différentielle ;
   - on détermine un facteur d'échelle à partir de la valeur de la différence de la première et de la seconde fréquence de perturbation, et
   - on fixe la fréquence de balayage ajustée au moyen du facteur d'échelle et de la fréquence de balayage différentielle,

   et dans lequel la fréquence de balayage différentielle est choisie aussi petite que la perturbation (50) se trouve le dans le même mode d'onde supérieure aussi bien pour la première fréquence de balayage que pour la seconde fréquence de balayage jusqu'à une fréquence de perturbation maximum prédéterminée.

2. Procédé selon la revendication 1,
   dans lequel le signal de réception numérique allongé dans le temps est récupéré plusieurs fois avec à chaque fois une autre fréquence de balayage qui est choisie de manière aléatoire ou pseudo aléatoire, et le temps de parcours est déterminé à partir d'une moyenne des familles de signaux de réception récupérés plusieurs fois.

3. Procédé selon l'une des revendications précédentes,
   dans lequel on effectue dans une première étape une mesure sur une plage de mesure maximum avec une première fréquence de balayage et une première fréquence d'émission, qui donne en résultat un premier facteur d'allongement temporel, et ensuite dans une seconde étape une mesure uniquement sur la plage partielle de la plage de mesure dans laquelle se trouve la part de signal réfléchi au niveau de la surface limite, avec une seconde fréquence de balayage et avec une seconde fréquence d'émission, qui donne en résultat un second facteur d'allongement temporel qui est supérieur au premier facteur d'allongement temporel.

4. Procédé selon l'une des revendications précédentes,
   dans lequel lors d'un changement de la fréquence de balayage, on change également la fréquence d'émission, en particulier afin de maintenir un facteur d'allongement temporel constant lors d'un changement de fréquence.

5. Capteur (10), en particulier capteur d'état de remplissage, comprenant un émetteur (36) et un récepteur (38) pour émettre et recevoir un signal électromagnétique, en particulier un signal à micro-ondes, et comprenant une commande (30, 32, 34) qui est réalisée pour déterminer la distance d'une surface limite (18) avec un procédé selon l'une des revendications 1 à 4.

6. Capteur (10) selon la revendication 5,
   dans lequel il est prévu un filtre pour éliminer des signaux à l'extérieur d'une gamme utile (54) et/ou il est prévu un filtre pour supprimer des fréquences de perturbation (50).

7. Capteur (10) selon la revendication 5 ou 6,
   dans lequel il est prévu un DDS (34) ou une structure PLL (34) afin de régler les fréquences de balayage et/ou les fréquences d'émission.

8. Capteur (10) selon l'une des revendications 5 à 7,
   qui est réalisé comme un capteur radar qui fonctionne suivant le principe TDR, et dans lequel il est prévu une mono-sonde, une double sonde ou une sonde coaxiale (24) pour guider le signal.

## Figur 1

## Figur 2

Figur 3 (Stand der Technik)

Figur 4

## Figur 5

## Figur 6

Figur 7

Figur 8

Figur 9

Figur 10

## Figur 11

## Figur 12

## Figur 13

## Figur 14

# Figur 15

$$F_s = F_{s0}$$ — S1

Abtastfrequenz auf $F_s$ einstellen — S2

Wartezeit, bis Frequenz stabil — S3

S8

$F_s$ neu festlegen

Messung bei Abtastfrequenz $F_s$ — S4

Störerfrequenz im digitalen Band bestimmen — S5

Störerfrequenz außerhalb des Nutzbandes? — S6

nein

ja

$F_s$ ist eingestellt, weitere Messung / Auswertung — S7

Figur 16

Figur 17

Figur 18

Figur 19

Figur 20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070192391 A1
- US 200710192391 A1
- DE 19949992 A1
- DE 102005021358 A1